# EUROPEAN PATENT SPECIFICATION

(11) **EP 1 000 524 B1**
(45) Date of publication and mention of the grant of the patent: **02.07.2003**
(21) Application number: 97947221.4
(22) Date of filing: 09.12.1997
(51) Int. Cl.: H04R 1/04

(54) **AN ELECTRICAL CONTACT FREE MICROPHONE ATTACHMENT FOR A FLIP-TYPE RADIO PHONE**
MIKROFON MIT VERBINDUNG OHNE ELEKTRISCHEN KONTAKT FÜR EIN KLAPPRADIOTELEFON
MICROPHONE A RACCORDEMENT SANS CONTACT ELECTRIQUE POUR APPAREIL TELEPHONIQUE RADIO DU TYPE A RABAT

(30) Priority: 28.05.1997 KR 2121497
(43) Date of publication of application: 17.05.2000
(73) Proprietor: Samsung Electronics Co., Ltd., Suwon City, Kyungki-do 442-370 (KR)
(72) Inventor: LEE, Kang, Hoon Hanjin Apt. 804-1801, Kyungki-do 463-010 (KR); CHOEN, Kyung, Jun, Songpa-gu Seoul 138-151 (KR)
(74) Representative: Grünecker, Kinkeldey, Stockmair & Schwanhäusser Anwaltssozietät
(86) International application number: PCT/KR97/00262
(87) International publication number: WO 98/054925

(56) References cited:
- WO-A-96/17463
- US-A- 5 384 844
- US-A- 5 537 472

## Description

### Background of the Invention

### 1. Field of the Invention

The present invention relates to phones and more particularly, to a microphone attachment for a flip-type radio phone, which connects a microphone in the flip portion of the phone to the audio circuit in the main set of the phone with no direct physical electrical contact.

### 2. Description of the Related Art

In the present specification, a radio phone is defined as including both a cellular phone set for establishing communications with base stations and a portable handset for establishing communications with an ordinary telephone set fixedly connected with the phone line.

The flip-type radio phone was developed in order to reduce the size of the radio phone. The flip-type radio phone includes a flip portion (the "flip") and a main set. The flip is attached to the main set by a hinge mechanism and is either closed to or opened from the main set. The communication mode of the radio phone is automatically set by opening the flip. Ideally, since a distance of at least about 14cm is required from the mouth of the user to the ear, if the microphone is mounted in the flip, the length of the main set may be considerably reduced. This is because the length of the flip can compensate for the reduced length of the main set. Such a radio phone is for instance known from document US-A-5 384 844. However, in such a flip-type radio phone, if the flip is fractured or if the junction between the flip and the main set, which mechanically connects the microphone and the main set, is worn out, the radio phone cannot function properly.

### Summary of the Invention

It is an object of the present invention to provide a flip-type radio phone which functions properly even if the junction between the flip and the main set is worn out.

Another object of the present invention is to provide a flip-type radio phone with a microphone attachment for functionally connecting the microphone in the flip to the audio circuit of the main set without using direct physical electrical contact.

According to the present invention, an electrical contact free microphone attachment is provided, for a flip-type radio phone which has a flip, a microphone mounted in said flip, a main set, an audio circuit installed in the main set, and a connecting device for connecting the flip with the main set. The inventive microphone attachment comprises a transformer having a primary coil, a secondary coil and a core. The primary coil is arranged in the flip to connect with the microphone. The secondary coil is arranged in the main set to connect with the audio circuit. The core is fixedly arranged in an axial hole formed in the connecting device. Thus, a signal path is established between the microphone and the audio circuit with no direct physical electrical contact therebetween but rather an electromagnetic induction (e.g., transformer) coupled connection. It is to be understood that direct physical electrical contact refers to electrical connection between components wherein electrical contacts of, for instance, a connector or switch, physically touch one another in order to conduct a signal therebetween. By employing transformer coupled electrical connection, the present invention does not require direct physical electrical contacts.

These and other objects, features and advantages of the present invention will become apparent from the following detailed description of illustrative embodiments thereof, which is to be read in connection with the accompanying drawings, where the same reference numerals are used to represent the same functional elements.

### Brief Description of the Drawings

FIG. 1 is a perspective view illustrating a flip-type radio phone with a microphone attachment according to the present invention;
FIG. 2 is a circuit diagram illustrating a microphone attachment according to an embodiment of the present invention;
FIG. 3 is an exploded perspective view illustrating a hinge mechanism for closing and opening the flip of a flip-type radio phone according to an embodiment of the present invention;
FIG. 4 is a partial cross sectional view illustrating the flip attached to the main set according to an embodiment of the present invention; and
FIG. 5 is a partial perspective view illustrating the flip being attached to the main set according to an embodiment of the present invention.

### Detailed Description of Preferred Embodiments

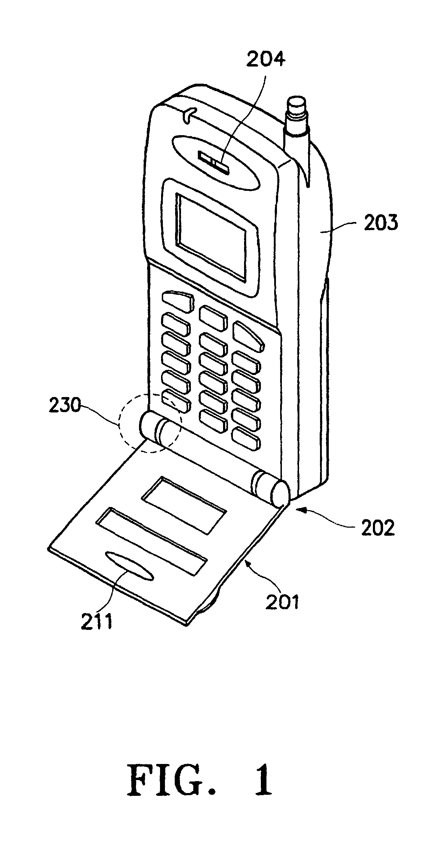

Referring to FIG. 1, a flip 201 is connected with a main set 203 by means of a connecting device 202. A microphone 211 is mounted in flip 201 to preferably provide at least 14cm of distance between microphone 211 and a speaker 204 mounted in the main set 203 when flip 201 is in an open position.

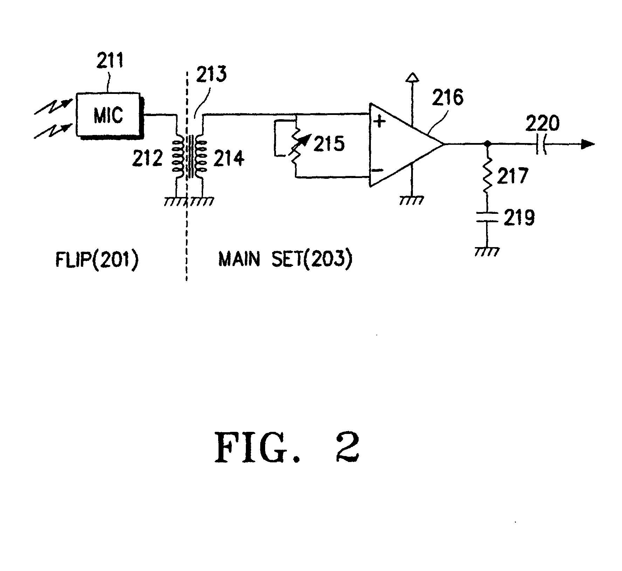

FIG. 2 is circuit diagram illustrating the electrical connection of flip 201 to main set 203 utilizing a microphone attachment according to a preferred embodiment of the present invention. In order to operatively connect microphone 211 with an audio circuit of the main set 203 without using direct physical electrical contacts, a transformer is employed. The primary coil 212 of the transformer is connected to microphone 211 and the secondary coil 214 is connected to an amplification circuit, as shown in FIG. 2. The amplification circuit includes: amplifier 216; a variable resistor 215 coupled between the inverting and non-inverting input terminals of amplifier 216; a resistor 217 having one end coupled to the output terminal of amplifier 216; a capacitor 219 having one end coupled to ground and its other end coupled to the other end of resistor 217; and a capacitor 220 having one end coupled to the output of amplifier 216 and its other end for connecting to a subsequent portion of the audio circuit. Thus, the voice signal generated in primary coil 212 is induced through the magnetic core 213 in secondary coil 214. The core 213 is made of a ferrite. The voice signal induced in secondary coil 214 is amplified by the amplifier 216 applied to a transmitter portion of the audio circuit (not shown).

The microphone 211 and primary coil 212 are arranged in flip 201 while secondary coil 214 is arranged in main set 203. The core 213 may be arranged in the flip part or the main set part of connecting device 202. In the present embodiment, it is arranged in the main set part. In this way, the voice signal generated by microphone 211 can be transmitted through the transformer to the audio circuit of the main set without using direct physical electrical contact therebetween.

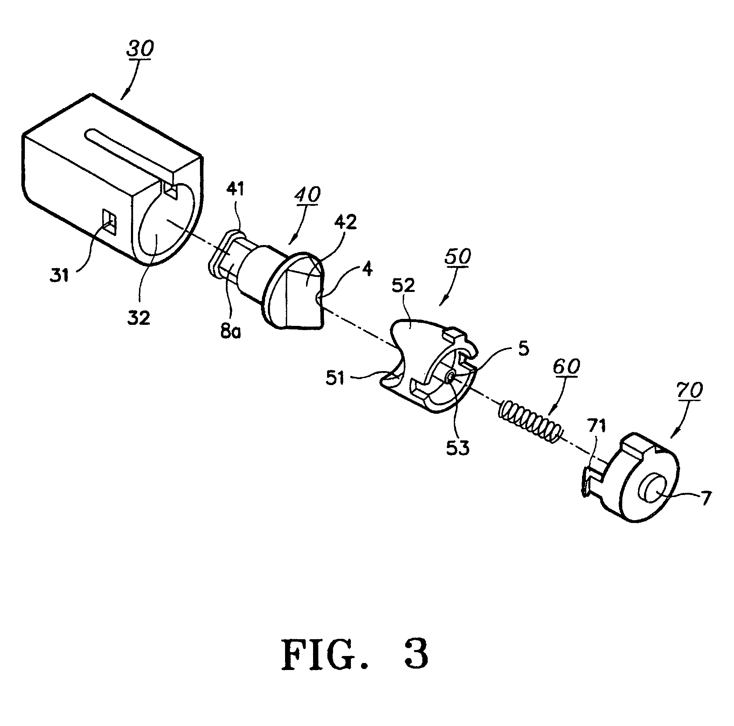

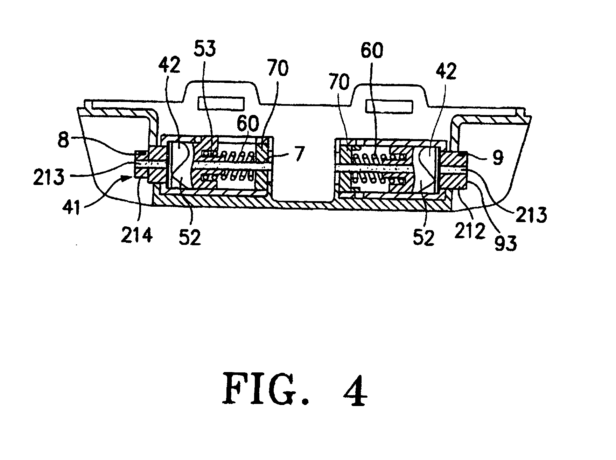

The arrangement of the microphone attachment in connecting device 202 is described with reference to FIGs. 3 and 4. Connecting device 202 for closing and opening the flip of a flip-type radio phone includes two hinge mechanisms 230, each symmetrically located at the juncture between the flip 201 and the main set 203, on the right and left sides of the phone, respectively. FIG. 3 is an exploded perspective view of a single hinge mechanism 230 according to a preferred embodiment of the present invention. Although one hinge mechanism is shown in FIG. 3, both hinge mechanisms are identical. Thus, while the following description describes the arrangement of one hinge mechanism, it is to be understood that the description equally applies to the arrangement of both hinge mechanisms. FIG. 4 is a partial cross sectional view illustrating the flip attached to the main set according to a preferred embodiment of the present invention.

Each hinge mechanism 230 includes a hinge housing 30 having a through hole 32, and a hinge shaft 40 inserted into hinge housing 30. The hinge shaft 40 has a shank 41. The hinge shaft 40 also has a projection 42 for engagement with a cam hinge 50. The end portion of shank 41 is projected through the outer end of through hole 32 of hinge housing 30. The cam hinge 50 has a depressed part 51 and a projected part 52 for engaging with projection 42 of hinge shaft 40. A hinge cover 70 is provided to cover hinge housing 30. The hinge cover 70 includes a hook 71 locked in a fastening hole 31 formed in hinge housing 30. A coil spring 60 is disposed between cam hinge 50 and hinge cover 70.

In order to mount core 213 of the transformer in hinge mechanism 230, there are provided axial holes 4, 5, 7 formed respectively along the central axes of hinge shaft 40, cam hinge 50 and hinge cover 70. Axial hole 4, located in hinge shaft 40, is dimensioned to firmly fix core 213. Axial holes 6 and 7, located in cam hinge 50 and hinge cover 70, respectively, are dimensioned to slide along core 213.

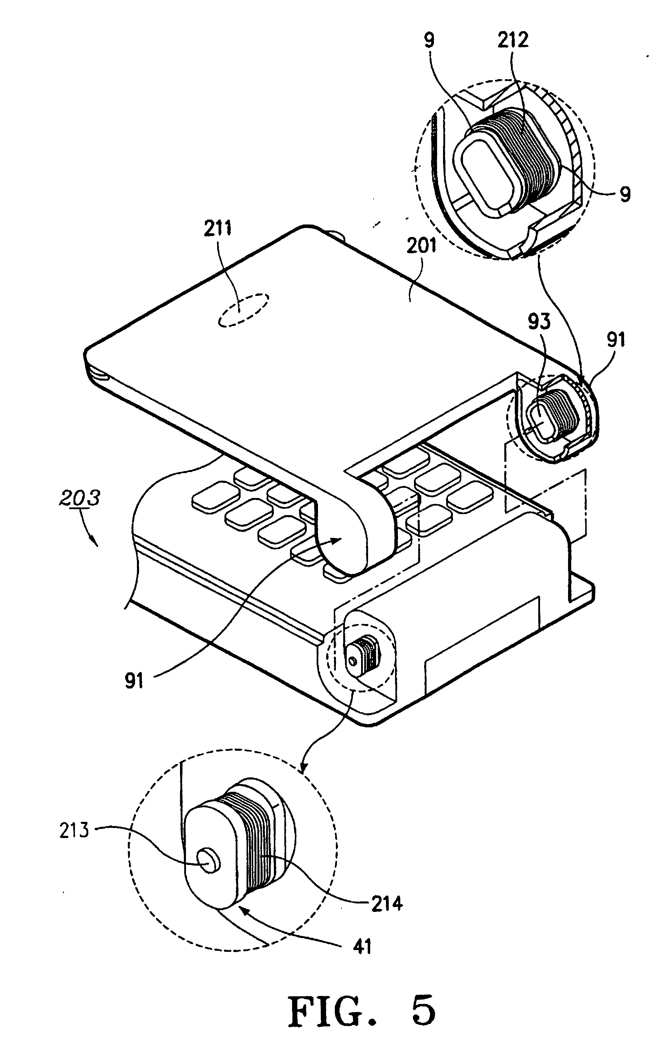

Attachment of flip 201 to main set 203 according to a preferred embodiment of the present invention is described with reference to FIG. 4 in a partial cross sectional view, and to FIG. 5 in a partial perspective view. The projected end portions of shanks 41 of hinge shafts 40 have respective guide grooves 8 formed along their perimeters to guide secondary coil 214. Meanwhile, a pair of connecting parts 93 are formed in the neck portion 91 of flip 201 where the flip is attached to the main set. Each of connecting parts 93 has a receiving hole to engage with and enclose the projected end portion of the shank 41 on the main set 203. The connecting parts 93 have respective guide grooves 9 formed along their perimeters to guide primary coil 212 connected to microphone 211. Hence, when mounting flip 201 on main set 203, primary coil 212 which is wound around connecting part 93 encloses secondary coil 214 which is wound around the projected end portion of shank 41 of hinge shaft 40. Thus, core 213 is coaxially arranged in the common center of primary and secondary coils 212 and 214. While the primary and secondary coils are arranged in both ends of the connecting device in the present embodiment, it should be noted that they may be arranged in one end of the connecting device to perform a similar desired function.

When opening flip cover 201 to make a phone call, the curved surface between depressed part 51 and projected part 52 of cam hinge 50 cooperates slidingly with projection 42 of hinge shaft 40, so that cam hinge 50 reciprocates along core 213 until reaching the open fixed position. In this position, the projection 42 engages with depressed part 51 of cam hinge 50 with the help of the resilient force of coil spring 60. The closing of flip cover 201 is performed in the like manner.

The turns ratio of primary coil 212 to secondary coil 214 is made N:1. The voice signal generated by microphone 211 is transferred through the mutual electromagnetic inductance of primary and secondary coils 212 and 214 to amplifier 216 to the input terminal of the audio circuit of the main set 203. The variable resistor 215 determines the amplification factor of amplifier 216.

Accordingly, the audio signal generated by the microphone 211 mounted in flip 201 can be transferred to the audio circuit in main set 203 without using any mechanical contact between the microphone circuit and the audio circuit. Advantageously, this allows the flip-type radio phone to function properly even if the junction between flip 201 and main set 203 has been worn out. Furthermore, since the main set 203 contains all the circuit parts except the microphone 211 and the primary coil 212, the manufacturing process is simplified. Additionally, an impaired flip 201 may be more easily repaired.

Although illustrative embodiments of the present invention have been described herein with reference to the accompanying drawings, it is to be understood that the invention is not limited to those precise embodiments, and that various other changes and modifications may be affected therein by one skilled in the art without departing from the scope of the claims.

## Claims

1. An electrical contact free microphone attachment for a flip-type radio phone having a flip (201), a microphone (211) mounted in said flip, a main set (203), an audio circuit (215, 216, 217, 219, 220) installed in said main set (203), and a connecting device (202) for connecting said flip (201) with said main set (203), the microphone attachment comprising a transformer having a primary coil (212), a secondary coil (214) and a core (213), wherein said primary coil (212) is arranged in said flip (201) to connect with said microphone (211), said secondary coil (214) is arranged in said main set (203) to connect with said audio circuit (215-217, 219, 220), the connecting device (202) having an axial hole (4, 5, 7) formed therein such that said core (213) is fixedly arranged in said axial hole (4, 5, 7), wherein a signal path is established between said microphone (211) and said audio circuit (215-217, 219, 220) with no direct physical electrical contact therebetween.

2. The microphone attachment of Claim 1, wherein said connecting device (202) includes a main set portion connected to said main set (203) and a flip portion connected to said flip (201).

3. The microphone attachment of Claim 2, wherein said axial hole (4, 5, 7) for receiving said core (213) is formed in said main set portion of said connecting device (202).

4. The microphone attachment of Claim 2, wherein said axial hole for receiving said core (213) is formed in said flip portion of said connecting device (202).

5. The microphone attachment of Claim 1, wherein said connecting device (202) connects said main set (203) to said flip (201) at at least one physical mechanical juncture.

6. The microphone attachment of Claim 5, wherein said microphone attachment is arranged in at least one of said physical mechanical junctures.

7. An electrical contact free microphone attachment and connection device arrangement for a flip-type radio phone having a flip (201), a microphone (211) mounted in said flip (201), a main set (203), an audio circuit (215-217, 219, 220) installed in said main set (202), said connecting device (202) connecting said flip (201) with said main set (203), the microphone attachment and connection device arrangement comprising:
a pair of hinge housings (30) each having through holes (32) formed therein;
a pair of hinge shafts (40) respectively inserted into each of said hinge housings (30) through one end of the through holes to project an end portion (41) of each of said hinge shafts (40) out of the other end of each of said hinge housings (30);
a pair of cam hinges (50) to respectively engage with said hinge shafts (40);
a pair of connecting parts (93) formed in said flip (201) to respectively engage with and enclose said projected end portions (41) of said hinge shafts (40);
a pair of hinge covers (70) to respectively cover each hinge housing (30);
a pair of coil springs (60) respectively disposed between each of said cam hinges (50) and said hinge covers (70);
said hinge shafts (40), said cam hinges (50) and said hinge covers (70) having portions forming axial holes (4, 5, 7) along the central axes of said hinge shafts (40) through said cam hinges (50) and said hinge covers (70);
and a transformer having a primary coil (212), a secondary coil (214) and a core (213), wherein said core (213) is fixedly arranged in said axial hole, said secondary coil (214) is wound around said projected end portions (42) of said hinge shafts (40) containing said core (213) to connect with said audio circuit (215-217, 219, 220) and said primary coil (212) is wound around said connecting parts so as to connect with said microphone (211), thereby establishing a signal path between said microphone (211) and said audio circuit (215-217, 219, 220) with no direct physical electrical contact therebetween.

8. The microphone attachment of Claim 7, wherein said projected end portions (41) of said hinge shafts (40) have guide grooves (8) formed along their perimeters to guide said secondary coil (214).

9. The microphone attachment of Claim 7, wherein said connecting parts (93) have guide grooves (9) formed along their perimeters to guide said primary coil (212).

10. The microphone attachment of Claim 7, wherein said axial holes (4) formed in said hinge shafts (40) are dimensioned to firmly fix said core (213).

11. The microphone attachment of Claim 10, wherein said axial holes (5, 7) formed in said cam hinges (50) and said hinge covers (70) are dimensioned to slide along said core (213).

12. An electrical contact free microphone attachment and connection device arrangement for a flip-type radio phone having a flip (201), a microphone (211) mounted in said flip (201), a main set (203), an audio circuit (215-217, 219, 220) installed in said main set (203), said connecting device for connecting said flip (201) with said main set (203), the microphone attachment and connection device arrangement comprising:
a hinge housing (30) having a through hole (32) formed therein;
a hinge shaft (40) inserted into said hinge housing through one end of the through hole (32) to project an end portion (41) of said hinge shaft (40) out of the other end of said hinge housing (30);
a cam hinge (50) to engage with said hinge shaft (40);
a connecting part (93) formed in said flip (201) to engage with and enclose said projected end portion (41) of said hinge shaft (40);
a hinge cover (70) to respectively cover said hinge housing (30);
a coil spring (60) disposed between said cam hinge (50) and said hinge cover (70);
said hinge shaft (40), said cam hinge (50) and said hinge cover (70) having portions forming axial holes (4, 5, 7) along the central axes of said hinge shaft (40) through said cam hinge (50) and said hinge cover (70);
and a transformer having a primary coil (212), a secondary coil (214) and a core (213), wherein said core (213) is fixedly arranged in said axial hole (4, 5, 7) said secondary coil (214) is wound around said projected end portion (41) of said hinge shaft (40) containing said core (213) to connect with said audio circuit (215-217, 219, 220), and said primary coil (212) is wound around said connecting part (93) so as to connect with said microphone (211), thereby establishing a signal path between said microphone (211) and said audio circuit (215-217, 219, 220) with no direct physical electrical contact therebetween.

## Patentansprüche

1. Mikrofonanordnung für ein Klapptelefon ohne elektrischen Kontakt mit einer Klappe (201), einem in der Klappe angeordneten Mikrofon (211), einem Hauptteil (203), einem Audioschaltkreis (215, 216, 217, 219, 220), der in dem Hauptteil (203) installiert ist, und einer Verbindungseinrichtung (202) zur Verbindung der Klappe (201) mit dem Hauptteil (203), wobei die Mikrofonanordnung einen Transformator mit Primärspule (212), Sekundärspule (214), und Spulenkern (213) umfaßt, welche Primärspule (212) in der Klappe (201) zur Verbindung mit dem Mikrofon (211) angeordnet ist, welche Sekundärspule (214) in dem Hauptteil (203) zur Verbindung mit dem Audioschaltkreis (215 - 217, 219, 220) angeordnet ist, wobei die Verbindungseinrichtung (202) eine in dieser ausgebildete axiale Öffnung (4, 5, 7) aufweist, in der der Spulenkern (213) fest angeordnet ist, und wobei ein Signalpfad zwischen dem Mikrofon (211) und dem Audioschaltkreis (215 - 217, 219, 220) ohne direkten körperlichen elektrischen Kontakt dazwischen gebildet ist.

2. Mikrofonanordnung nach Anspruch 1, wobei die Verbindungseinrichtung (202) einen Hauptteilbereich, der mit dem Hauptteil (203) verbunden ist, und einen Klappenbereich, der mit der Klappe (201) verbunden ist, aufweist.

3. Mikrofonanordnung nach Anspruch 2, wobei die axiale Öffnung (4, 5, 7) zur Aufnahme des Spulenkerns (213) in dem Hauptteilbereich der Verbindungseinrichtung (202) gebildet ist.

4. Mikrofonanordnung nach Anspruch 2, wobei die axiale Öffnung zur Aufnahme des Spulenkerns (213) in dem Klappenbereich der Verbindungseinrichtung (202) gebildet ist.

5. Mikrofonanordnung nach Anspruch 1, wobei die Verbindungseinrichtung (202) den Hauptteil (203) mit der Klappe (201) mittels wenigstens einer körperlich mechanischen Verbindung verbindet.

6. Mikrofonanordnung nach Anspruch 5, wobei die Mikrofonanordnung in wenigstens einer der körperlich mechanischen Verbindungen angeordnet ist.

7. Mikrofonanordnung und -verbindungsvorrichtung für ein Klapptelefon ohne elektrischen Kontakt mit einer Klappe (201), einem in der Klappe (201) montierten Mikrofon (211), einem Hauptteil (203), einem Audioschaltkreis (215 - 217, 219, 220), der in dem Hauptteil (202) installiert ist, welche Verbindungsvorrichtung (202) die Klappe (201) mit dem Hauptteil (203) verbindet, wobei die Mikrofonanordnung und -verbindungsvorrichtung aufweist:
ein Paar von Schwenkgehäusen (30), von denen jedes Öffnungen (32) in sich aufweist;
ein Paar von Schwenkwellen (40), welche entsprechend in jedes der Schwenkgehäuse (30) über ein Ende der Öffnungen eingesetzt ist, wobei ein Endabschnitt (41) einer jeden Schwenkwelle (40) aus dem anderen Ende jedes Schwenkgehäuses (30) vorsteht;
ein Paar von Nockenschwenkteilen (50) zum entsprechenden Angriff an den Schwenkwellen (40);
ein Paar von Verbindungsteilen (93), die in der Klappe (201) zum entsprechenden Angriff mit und zur Aufnahme von den vorstehenden Endabschnitten (41) der Schwenkwellen (40) dienen;
ein Paar von Lagerabdeckungen (70) zur entsprechenden Abdeckung eines jeden Schwenkgehäuses (30);
ein Paar von Spiralfedern (60), welche entsprechend zwischen jedem Nockenschwenkteil (50) und Lagerabdeckung (70) angeordnet sind;
wobei die Schwenkwellen (40), die Nockenschwenkteile (50) und die Lagerabdekkung (70) Abschnitte aufweisen, die axiale Öffnungen (4, 5, 7) entlang der Mittelachsen von Schwenkwellen (40) durch Nockenschwenkteile (50) und Lagerabdekkungen (70) bilden, und
einen Transformator mit Primärspule (212), Sekundärspule (214) und Spulenkern (213), wobei der Spulenkern (213) fest in der axialen Öffnung angeordnet ist, die Sekundärspule (211) um die vorstehenden Endabschnitte (42) der den Spulenkern (213) enthaltenden Schwenkwellen (40) zur Verbindung mit dem Audioschaltkreis (215 - 217, 219, 220) herumgewickelt ist, und wobei die Primärspule (212) um die Verbindungsteile so herumgewickelt ist, dass sie mit dem Mikrofon (211) verbunden ist, wodurch ein Signalpfad zwischen dem Mikrofon (211) und dem Audioschaltkreis (215 - 217, 219, 220) ohne direkten körperlichen elektrischen Kontakt dazwischen gebildet ist.

8. Mikrofonanordnung nach Anspruch 7, wobei die vorstehenden Endabschnitte (41) der Schwenkwellen (40) entlang ihres Umfangs Führungsnuten (8) zur Führung der Sekundärspule (214) aufweisen.

9. Mikrofonanordnung nach Anspruch 7, wobei die Verbindungsteile (93) entlang ihres Umfangs Führungsnuten (9) zur Führung der Primärspule (212) aufweisen.

10. Mikrofonanordnung nach Anspruch 7, wobei die axialen Öffnungen (4), die in den Schwenkwellen (40) gebildet sind, zur festen Halterung des Spulenkems (213) dimensioniert sind.

11. Mikrofonanordnung nach Anspruch 10, wobei die axialen Öffnungen (5, 7), die in den Nockenschwenkteilen (50) und in den Lagerabdeckungen (70) gebildet sind, zum Gleiten entlang des Spulenkems (213) dimensioniert sind.

12. Mikrofonanordnung und -verbindungsvorrichtung für ein Klapptelefon ohne elektrischen Kontakt mit einer Klappe (201), einem in der Klappe (201) montierten Mikrofon (211), einem Hauptteil (203), einem in dem Hauptteil (203) installierten Audioschaltkreis (215 - 217, 219, 220), wobei die Verbindungsvorrichtung zur Verbindung der Klappe (201) mit dem Hauptteil (203) dient und wobei die Mikrofonanordnung und -verbindungsvorrichtung aufweist:
ein Schwenkgehäuse (30) mit einer in diesem gebildeten Durchgangsöffnung (32);
einer in das Schwenkgehäuse durch ein Ende der Durchgangsöffnung (32) eingesetzten Schwenkwelle (40), wobei ein Endabschnitt (41) der Schwenkwelle (40) aus dem anderen Ende des Schwenkgehäuses (30) vorsteht;
ein Nockenschwenkteil (50) zum Angriff an die Schwenkwelle (40);
ein Verbindungsteil (93), das in der Klappe (201) zum Angriff an und zur Aufnahme des vorstehenden Endabschnitts (41) der Schwenkwelle (40) gebildet ist;
eine Lagerabdeckung (70) zur entsprechenden Abdeckung des Schwenkgehäuses (30);
eine Spiralfeder (60), die zwischen dem Nockenschwenkteil (50) und der Lagerabdeckung (70) angeordnet ist;
wobei Schwenkwelle (40), Nockenschwenkteil (50) und Lagerabdeckung (70) Abschnitte aufweisen, die axiale Öffnungen (4, 5, 7) entlang von Mittelachsen von Schwenkwelle (40) durch Nockenschwenkteil (50) und Lagerabdeckung (70) aufweisen; und
einen Transformator mit einer Primärspule (212), einer Sekundärspule (214) und einem Spulenkern (213), welcher Spulenkern (213) fest in der axialen Öffnung (4, 5, 7) angeordnet ist, welche Sekundärspule (214) um den vorstehenden Endabschnitt (41) der den Spulenkern (213) enthaltenen Schwenkwelle (40) herumgewickelt ist zur Verbindung mit dem Audioschaltkreis (215 - 217, 219, 220), und welche Primärspule (212) um den Verbindungsteil (93) zur Verbindung mit dem Mikrofon (211) herumgewickelt ist, wodurch ein Signalpfad zwischen dem Mikrofon (211) und dem Audioschaltkreis (215 - 217, 219, 220) ohne direkten körperlichen elektrischen Kontakt dazwischen gebildet ist.

## Revendications

1. Raccordement de microphone sans contact électrique pour radiotéléphone du type à volet rabattable, présentant un volet (201), un microphone (211) monté dans ledit volet, un appareil principal (203), un circuit audio (215, 216, 217, 219, 220) installé dans ledit appareil principal (203) et un dispositif de connexion (202) destiné à connecter ledit volet (201) et ledit appareil principal (203), le raccordement de microphone comprenant un transformateur doté d'une bobine primaire (212), d'une bobine secondaire (214) et d'un noyau (213), dans lequel ladite bobine primaire (212) est disposée dans ledit volet (201) pour se connecter audit microphone (211), ladite bobine secondaire (214) est disposée dans ledit appareil principal (203) pour se connecter audit circuit audio (215-217, 219, 220), le dispositif de connexion (202) présentant un trou axial (4, 5, 7) ménagé dans ledit dispositif de manière à ce que ledit noyau (213) soit disposé de manière fixe dans ledit trou (4, 5, 7), un circuit de signal s'établissant entre ledit microphone (211) et ledit circuit audio (215-217, 219, 220) sans contact électrique physique direct entre eux.

2. Raccordement de microphone selon la revendication 1, dans lequel ledit dispositif de connexion (202) comprend une partie appareil principal, connectée audit appareil principal (203), et une partie volet, connectée audit volet (201).

3. Raccordement de microphone selon la revendication 2, dans lequel ledit trou axial (4, 5, 7) destiné à recevoir ledit noyau (213) est ménagé dans ladite partie appareil principal dudit dispositif de connexion (202).

4. Raccordement de microphone selon la revendication 2, dans lequel ledit trou axial destiné à recevoir ledit noyau (213) est ménagé dans ladite partie volet dudit dispositif de connexion (202).

5. Raccordement de microphone selon la revendication 1, dans lequel ledit dispositif de connexion (202) connecte ledit appareil principal (203) audit volet (201) par au moins une jonction mécanique physique.

6. Raccordement de microphone selon la revendication 5, dans lequel ledit raccordement de microphone est disposé dans au moins une desdites jonctions mécaniques physiques.

7. Montage d'un raccordement de microphone sans contact électrique et d'un dispositif de connexion pour radiotéléphone du type à volet rabattable, présentant un volet (201), un microphone (211) monté dans ledit volet (201), un appareil principal (203), un circuit audio (215-217, 219, 220) installé dans ledit appareil principal (203), ledit dispositif de connexion (202) connectant ledit volet (201) audit appareil principal (203), le montage constitué du raccordement de microphone et du dispositif de connexion comprenant :
une paire de logements de charnière (30) possédant chacun des trous traversants (32) ménagés à l'intérieur ;
une paire de tiges de charnière (40), insérées respectivement dans chacun desdits logements de charnière (30) par l'une des extrémités des trous traversants afin de projeter une extrémité (41) de chacune de ces tiges de charnière (40) par l'autre extrémité de chacun desdits logements de charnière (30) ;
une paire de charnières à came (50) destinées à s'engager respectivement avec lesdites tiges de charnière (40) ;
une paire de pièces de connexion (93) formées dans ledit volet (201), destinées à s'engager avec, respectivement, chacune desdites extrémités (41) saillantes desdites tiges de charnière (40) et à les entourer ;
une paire de chapeaux de charnière (70) destinés à recouvrir, respectivement, chacun des logements de charnière (30) ;
une paire de ressorts hélicoïdaux (60) disposés respectivement entre chacune desdites charnières à came (50) et chacun desdits chapeaux de charnière (70) ;
lesdites tiges de charnière (40), lesdites charnières à came (50) et lesdits chapeaux de charnière (70) présentant des parties formant des trous axiaux (4, 5, 7) le long des axes centraux desdites tiges de charnière (40), desdites charnières à came (50) et desdits chapeaux de charnière (70) ;
et un transformateur doté d'une bobine primaire (212), d'une bobine secondaire (214) et d'un noyau (213), dans lequel ledit noyau (213) est monté de manière fixe dans ledit trou axial, ladite bobine secondaire (214) est enroulée autour desdites extrémités (42) en saillie desdites tiges de charnière (40) contenant ledit noyau (213) afin de se connecter audit circuit audio (215-217, 219, 220), et ladite bobine primaire (212) est enroulée autour desdites pièces de connexion de manière à se connecter audit microphone (211), établissant ainsi un circuit de signal entre ledit microphone (211) et ledit circuit audio (215-217, 219, 220) sans contact électrique physique direct entre eux.

8. Raccordement de microphone selon la revendication 7, dans lequel lesdites extrémités (41) en saillie desdites tiges de charnière (40) présentent des rainures de guidage (8) formées en leur périphérie afin de guider ladite bobine secondaire (214).

9. Raccordement de microphone selon la revendication 7, dans lequel lesdites pièces de connexion (93) présentent des rainures de guidage (9) formées en leur périphérie afin de guider ladite bobine primaire (212).

10. Raccordement de microphone selon la revendication 7, dans lequel lesdits trous axiaux (4) formés dans lesdites tiges de charnière (40) sont dimensionnés de manière à fixer fermement ledit noyau (213).

11. Raccordement de microphone selon la revendication 10, dans lequel lesdits trous axiaux (5, 7) formés dans lesdites charnières à came (50) et lesdits chapeaux de charnière (70) sont dimensionnés de manière à coulisser sur ledit noyau (213).

12. Montage constitué d'un raccordement de microphone sans contact électrique et d'un dispositif de connexion pour radiotéléphone du type à volet rabattable, présentant un volet (201), un microphone (211) monté dans ledit volet (201), un appareil principal (203), un circuit audio (215-217, 219, 220) installé dans ledit appareil principal (203), ledit dispositif de connexion connectant ledit volet (201) audit appareil principal (203), le montage de raccordement de microphone et de dispositif de connexion comprenant :
un logement de charnière (30) possédant un trou traversant (32) ménagé à l'intérieur ;
une tige de charnière (40), insérée dans ledit logement de charnière par l'une des extrémités du trou traversant (32) afin de projeter une extrémité (41) de ladite tige de charnière (40) par l'autre extrémité dudit logement de charnière (30) ;
une charnière à came (50) destinée à s'engager avec ladite tige de charnière (40) ;
une pièce de connexion (93) formée dans ledit volet (201) afin de s'engager avec ladite extrémité (41) saillante de ladite tige de charnière (40) et à l'entourer ;
un chapeau de charnière (70) destiné à couvrir ledit logement de charnière (30) ;
un ressort hélicoïdal (60) disposé entre ladite charnière à came (50) et ledit chapeau de charnière (70) ;
ladite tige de charnière (40), ladite charnière à came (50) et ledit chapeau de charnière (70) présentant des parties formant des trous axiaux (4, 5, 7) le long des axes centraux de ladite tige de charnière (40), de ladite charnière à came (50) et dudit chapeau de charnière (70) ;
et un transformateur doté d'une bobine primaire (212), d'une bobine secondaire (214) et d'un noyau (213), dans lequel ledit noyau (213) est monté de manière fixe dans ledit trou axial(4, 5, 7), ladite bobine secondaire (214) est enroulée autour de ladite extrémité (41) en saillie de ladite tige de charnière (40) contenant ledit noyau (213) afin de se connecter audit circuit audio (215-217, 219, 220), et ladite bobine primaire (212) est enroulée autour de ladite pièce de connexion (93) de manière à se connecter audit microphone (211), établissant ainsi un circuit de signal entre ledit microphone (211) et ledit circuit audio (215-217, 219, 220) sans contact électrique physique direct entre eux.
